# EUROPÄISCHE PATENTSCHRIFT

(11) **EP 1 435 480 B1**
(45) Veröffentlichungstag und Bekanntmachung des Hinweises auf die Patenterteilung: **14.09.2011**
(21) Anmeldenummer: 03029834.3
(22) Anmeldetag: 24.12.2003
(51) Int. Cl.: F16K 27/04

(54) **Sanitärarmatur**
Sanitary fitting
Robinetterie sanitaire

(30) Priorität: 30.12.2002 DE 10261798
(43) Veröffentlichungstag der Anmeldung: 07.07.2004
(73) Patentinhaber: Hansgrohe AG, 77761 Schiltach (DE)
(72) Erfinder: Kruck, Stefan, 78733 Rötenberg (DE)
(74) Vertreter: Schöndorf, Jürgen

(56) Entgegenhaltungen:
- WO-A-90/05258
- DE-A- 3 243 750
- DE-U- 8 805 671
- US-A- 4 706 709
- US-A- 5 293 903

## Beschreibung

Die Erfindung geht aus von einer Sanitärarmatur mit einem Armaturengehäuse und einem darin untergebrachten Mischerventil.

Sanitärarmaturen dieser Art werden üblicherweise auf der Oberseite eines Waschbeckens, eines Spülbeckens, eines Waschtischs oder dergleichen montiert. Zuleitungen zu der Sanitärarmatur führen durch eine durch die Sanitärarmatur abgedeckte Öffnung in dem Waschbecken. Zum Anschalten von Zusatzgeräten haben solche Sanitärarmaturen häufig ein zusätzliches Absperrventil, mit dem beispielsweise die Wasserversorgung einer Waschmaschine, einer Spülmaschine oder dergleichen eingeschaltet werden kann. Dabei muss die Armatur häufig unterschiedliche Funktionen erfüllen. Das Absperrventil soll beispielsweise dazu dienen, eine Abzweigung eines kalten Wassers zu ermöglichen, oder auch die Abzweigung des warmen Wassers. Denkbar ist auch, dass das Absperrventil eine zusätzliche Leitung mit Mischtemperaturwasser bedienen soll.

Es ist bereits eine Einlocheinhebelmischbatterie bekannt, die zwei Zuleitungen und eine Ableitung aufweist. Mit Hilfe eines zusätzlichen Ventils kann die Ableitung mit einer der beiden Zuleitungen verbunden werden (DE 3243750).

Ebenfalls bekannt ist ein Adaptersockel (DE 8805671), der zwei durchgehende zu einer Sanitärarmatur führende Bohrungen aufweist. Eine der Bohrungen kann über ein Absperrventil mit einem Auslauf aus der Armatur verbunden werden. Zum Ändern der mit dem Auslass zu verbindenden Zuleitung muss der Sockel gegenüber der Sanitärarmatur versetzt werden.

Weiterhin bekannt ist ein Mischventil mit zwei Auslässen, bei dem der zweite Auslass über ein Dreiwegeventil entweder mit dem einen Einlass oder dem anderen Einlass verbunden werden kann (WO90/05258).

Der Erfindung liegt die Aufgabe zu Grunde, eine Sanitärarmatur derart auszugestalten, dass sie ohne konstruktive Änderungen bei der Montage an die unterschiedlichsten Anwendungsfälle angepasst werden kann.

Zur Lösung dieser Aufgabe schlägt die Erfindung eine Sanitärarmatur mit den im Anspruch 1 genannten Merkmalen vor. Weiterbildungen der Erfindung sind Gegenstand von Unteransprüchen.

Bei der Montage kann der Installateur also entscheiden, welcher der Anwendungsfälle vorliegt und die Armatur dann durch einfache Maßnahmen an diesen Anwendungsfall anpassen. Er kann also einstellen, mit welcher Leitung die Ableitung durch das zusätzliche Ventil verbindbar sein soll. Dies bedeutet also, dass die von der Armatur weg führende Leitung mit Hilfe des zusätzlichen Absperrventils geöffnet und geschlossen werden kann, also beispielsweise die Kaltwasserleitung. Eine Änderung der Position des Mischventils, das beispielsweise als eine Mischerkartusche ausgebildet ist, innerhalb des Armaturengehäuses ist dann nicht mehr erforderlich.

Die Anpassung an den Anwendungsfall kann beispielsweise dadurch geschehen, dass ein Teil der Armatur geändert wird, vorzugsweise ein Teil, der innerhalb des Armaturengehäuses so untergebracht ist, dass man ihn von außen nicht sehen kann. Beispielsweise wird also die weiterführende Leitung für eine Spülmaschine mit der Heißwasserzuleitung über das Absperrventil verbunden.

Das Umändern eines Teils der Armatur kann durch ein Umstecken eines Adapters oder dergleichen geschehen, oder auch durch Umstecken oder Austauschen der Anschlussleitungen zwischen dem Adapter und dem Boden.

Es ist in der Erfindung vorgesehen sein, dass die Armatur ein Adapterteil aufweist, das einen Durchgangskanal für eine mit dem Mischerventil verbundene Wasserführung und eine mit diesem Durchgangskanal durch das Absperrventil verbindbare Abzweigung aufweist. Es findet also praktisch eine Anzapfung eines durch das Adapterteil hindurch führenden Kanals statt. Insbesondere kann es sich dabei um einen Kanal handeln, der das Wasser dem Mischventil zuführt. Es ist aber auch denkbar und liegt im Rahmen der Erfindung, dass es sich bei diesem Kanal um einen Ausgangskanal des Mischventils handelt.

Dieses Adapterteil ist in der Erfindung in einem Sockelteil des Armaturengehäuses angeordnet. Bevor die Armatur montiert wird, ist dieser untere Sockelteil leichter zugänglich als ein weiter oben in dem Armaturengehäuse vorhandenes Teil. Daher erleichtert diese Anordnung die Anpassung bei der Montage.

Das Adapterteil ist so ausgebildet, dass es mindestens eine Durchbrechung für zu dem Mischventil führende und/oder von dem Mischventil kommende Leitungen aufweist. Diese Leitungen werden einfach durch die Durchbrechung hindurchgeführt, ohne dass sie für eine Anzapfung vorgesehen sind.

Das Adapterteil kann beispielsweise fest in dem Sockelteil angeordnet sein. In dem Sockelteil kann mit Vorteil auch das Absperrventil vorhanden sein. Zur Anpassung an die unterschiedlichen Anwendungsfälle, bei denen ja das eigentliche Mischventil unverändert in dem Armaturengehäuse sein soll, kann dann der Sockelteil zusammen mit dem Adapterteil in seiner Position verändert werden.

Es ist aber ebenfalls möglich und wird von der Erfindung vorgeschlagen, dass der Adapter in mehreren winkelmäßig versetzten Positionen mit dem Sockel verbindbar ist, oder anders ausgedrückt, dass eine Verstellung des Adapters gegenüber dem Sockel erfolgt. Dies hat den Vorteil, dass das in dem Sockel angeordnete Absperrventil immer an der gleichen Stelle bleiben kann, so dass man die Stelle, an der das Absperrventil angeordnet ist, rein nach ergonomischen Gesichtspunkten auswählen kann.

Bei dem erwähnten Sockelteil kann es sich um ein Sockelteil handeln, das vollständig innerhalb des Armaturengehäuses untergebracht ist. Es kann sich aber auch mit Vorteil um einen getrennten Bauteil handeln, das beispielsweise derart ausgebildet ist, dass der Rest des Armaturengehäuses von dem Sockelbauteil lösbar ist. Wenn die Leitungen in dem Armaturengehäuse Schläuche sind, was in Weiterbildung der Erfindung vorgesehen sein kann, so lässt sich dann das Armaturengehäuse von dem Sockelteil lösen und umlegen. Dies ist in manchen Fällen sinnvoll, wenn beispielsweise eine relativ große Armatur an einer Stelle angebracht wird, wo ein Fenster geöffnet werden soll und das Fenster beim Öffnen mit der Armatur kollidieren würde.

Weitere Merkmale, Einzelheiten und Vorzüge der Erfindung ergeben sich aus den Patentansprüchen, deren Wortlaut durch Bezugnahme zum Inhalt der Beschreibung gemacht wird, der folgenden Beschreibung bevorzugter Ausführungsformen der Erfindung sowie anhand der Zeichnung. Hierbei zeigen:
- Figur 1: eine teilweise geschnittene abgebrochene Darstellung einer Sanitärarmatur mit einem Sockelbauteil;
- Figur 2: eine Darstellung des Sockelbauteils allein;
- Figur 3: eine der Figur 1 entsprechende Darstellung einer zweiten Ausführungsform;
- Figur 4: die Kombination aus Sockelbauteil und Mischerkartuschenboden in einer ersten Position;
- Figur 5: eine Kombination aus Sockelbauteil und Mischerkartuschen- boden in einer zweiten Position;
- Figur 6: eine der Figur 4 und 5 entsprechende Darstellung in einer dritten Position;
- Figur 7: ein Sockelbauteil, das aus mehreren Teilen besteht;
- Figur 8: das Sockelbauteil der Figur 7 in zusammengesetztem Zustand;
- Figur 9: die Ansicht eines Adapterteils des Sockelbauteils der Figur 8 schräg von unten;
- Figur 10: einen Schnitt durch das Sockelbauteil der Figur 8;
- Figur 11: einen Schnitt durch das Sockelbauteil mit abgenommenem Absperrventil;
- Figur 12: einen Schnitt durch das Sockelbauteil der Figur 11 längs Linie XII - XII;
- Figur 13: einen Schnitt durch das Sockelbauteil der Figur 11 längs Linie XIII - XIII.

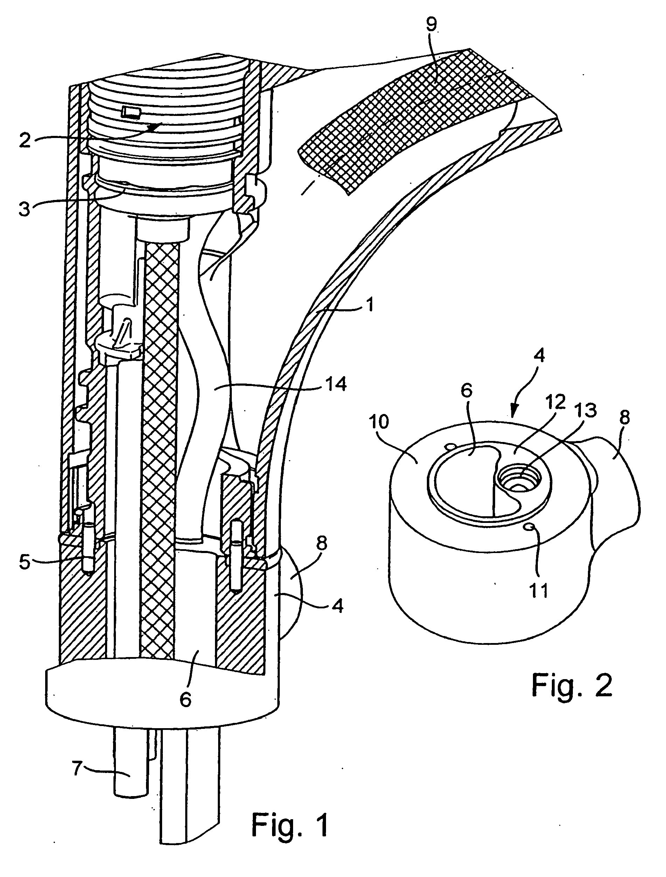

Figur 1 zeigt in einer abgebrochenen Darstellung den Aufbau einer Sanitärarmatur nach der Erfindung. In einem Armaturengehäuse 1 ist ein Mischerventil 2 in Form einer Kartusche angeordnet. Unterhalb der Kartusche ist ein Adapterboden 3 angeordnet, der die Flüssigkeitsverbindungen zwischen den Zuleitungen und den Öffnungen des Kartuschenbodens herstellt. Sowohl die Mischerkartusche als auch der Adapterboden 3 sollen bei den unterschiedlichen Anwendungsfällen nicht geändert werden.

Teil des Armaturengehäuses 1 ist ein Sockelbauteil 4, dessen Position in Relation zu dem Armaturengehäuse 1 durch Stifte 5 definiert wird. Das Sockelbauteil 4 enthält eine Durchbrechung 6, durch die Leitungen 7 hindurch gehen. Die Leitungen sind bei dieser Ausführungsform als Schläuche ausgebildet.

Das Sockelbauteil 4 enthält einen seitlichen Ansatz 8, in den ein Ventiloberteil für ein Absperrventil eingeschraubt werden kann. Dieses Absperrventil stellt die Verbindung zwischen einer Zuleitung, die von unten her in das Sockelbauteil eingeführt ist, und einer aus dem Sockelbauteil heraus führenden Leitung her.

Der Adapterboden 3 enthält im Regelfall drei Öffnungen, nämlich für eine Zuleitung für kaltes Wasser, eine Zuleitung für warmes Wasser und einen Auslass für Mischwasser. Dieser Auslass für Mischwasser ist im dargestellten Beispiel mit einem Schlauch 9 verbunden, der zu einem Auslauf aus dem Armaturengehäuse führt.

Figur 2 zeigt eine perspektivische Ansicht des Sockelbauteils 4 der Figur 1. Die Oberseite 10 des Sockelbauteils 4 ist eine ringförmige ebene Fläche, die parallel zu der Unterseite verläuft. In dieser Oberseite 10 sind die Öffnungen 11 für die bereits erwähnten Stifte 5 vorhanden. Neben der Durchbrechung 6 für die Zuleitungen enthält das Sockelbauteil in einem Adapterteil eine Öffnung 13, die über den Schlauch 14 mit einer Öffnung des Adapterbodens 3 verbunden wird. Diese Öffnung 13 stellt die obere Ausgangsöffnung eines Durchgangskanals dar, der an der Unterseite des Sockelbauteils bzw. des in ihm angeordneten Adapterbauteils 12 ausmündet.

Das Adapterteil 12 kann einstückiger Teil des Sockelbauteils 4 sein, oder aber als diesem gegenüber verdrehbar angeordnetes getrenntes Bauteil sein. Dies wird im Folgenden noch erklärt werden.

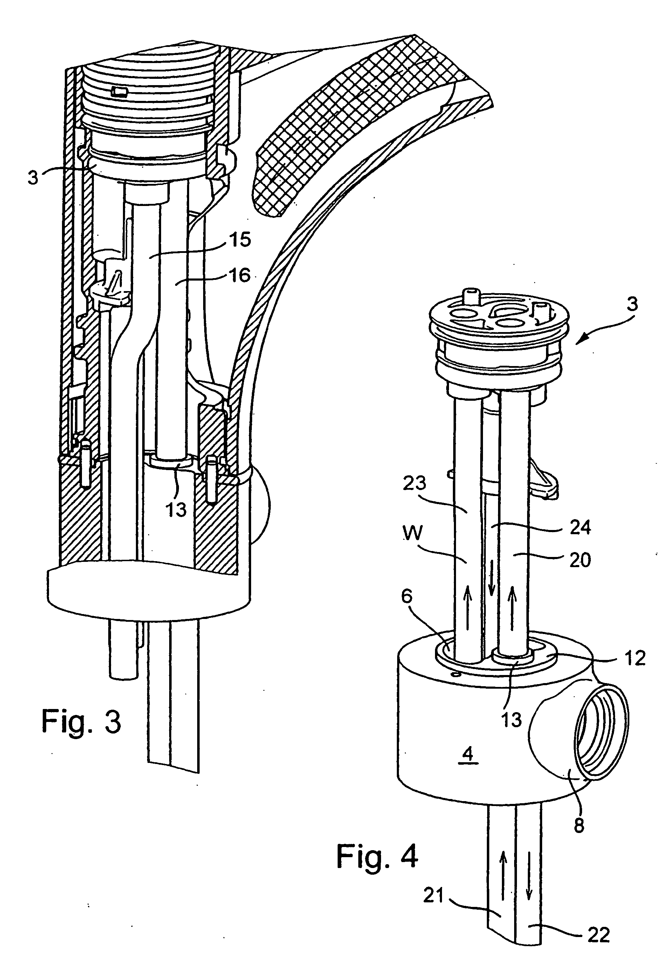

Figur 3 zeigt eine gegenüber der Figur 1 geänderte Ausführungsform, bei der die Zuleitungen zu dem Adapterboden 3 als starre Zuleitungen 15, 16 ausgebildet sind. Es ergibt sich aus der Figur 3, dass die Verbindungsleitung 16 zwischen der Öffnung 13 des Adapterbauteils 12 und dem Adapterboden 3 ein starres Rohr ist, das an einer bestimmten Stelle des Adapterbodens 3 angebracht ist. Soll die obere Öffnung 13 des Adapterbauteils 12 an einer anderen Stelle des Adapterbodens 3 angeschlossen werden, muss das Adapterbauteil 12 in eine andere Position gebracht werden, also eine Position, die um die Längsachse der Zuleitungen winkelmäßig verdreht ist.

Beispiele für diese unterschiedliche Verbindung ergeben sich aus den Figuren 4 bis 6. In Figur 4 ist die obere Öffnung 13 des Durchgangskanals des Adapterbauteils mit Hilfe eines Leitungsstücks 20 mit dem Kaltwassereingang des Adapterbodens 3 verbunden. Mit dem in Figur 4 nicht sichtbaren unteren Ende des Durchgangskanals des Adapterbauteils 12 ist demzufolge die Kaltwasserzuleitung 21 verbunden. Das in den Ansatz 8 einzusetzende Ventiloberteil stellt die Verbindung zwischen der Kaltwasserzuleitung 21 und der wegführenden Leitung 22 her. Die Zuleitung 23 für warmes Wasser und die Ableitung 24 für Mischwasser führen durch die Durchbrechung 6 des Adapterbauteils 12 hindurch. Dieser Anwendungsfall gilt für den Fall, dass der mit Hilfe des Absperrventils zu bedienende Verbraucher mit kaltem Wasser versorgt werden soll.

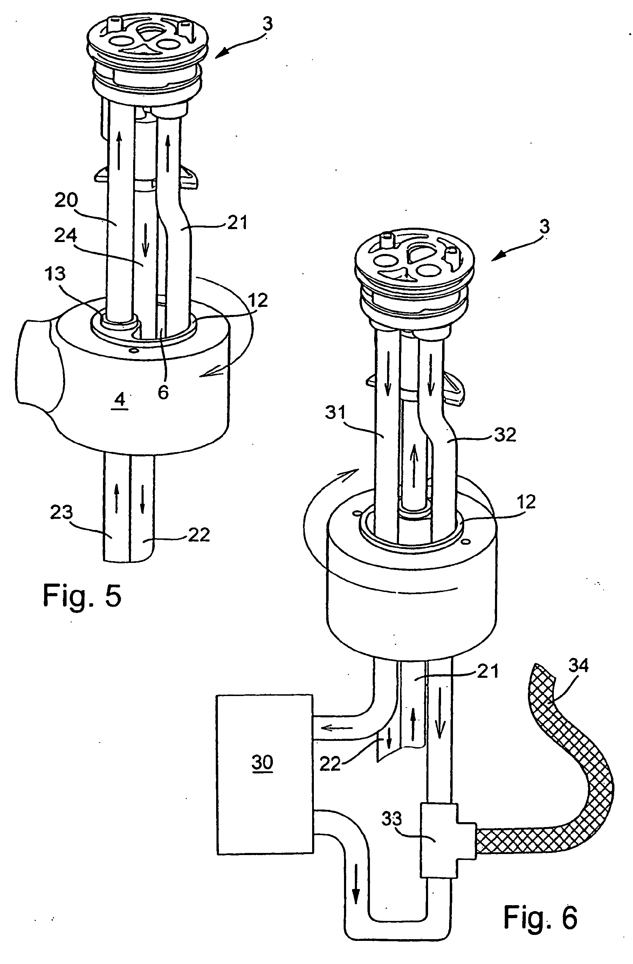

Figur 5 zeigt nun die Position, wenn der Verbraucher über die wegführende Leitung 22 mit heißem Wasser versorgt werden soll. Das Sockelbauteil 4 ist zusammen mit dem Adapterbauteil 12 in eine Position verdreht worden, wo die Ausgangsöffnung 13 des Durchgangskanals an der Stelle angeordnet ist, wo an der Unterseite des Adapterbodens 3 die Eingangsöffnung für heißes Wasser ist. Das Leitungsstück 20, das bei der Position der Figur 4 noch mit der Einlassöffnung für kaltes Wasser verbunden war, ist jetzt also mit der Einlassöffnung für heißes Wasser verbunden. Dagegen führt die Zuleitung 21 für kaltes Wasser durch die Durchbrechung 6 hindurch.

Figur 6 zeigt eine Position, bei der die Sanitärarmatur mit einem so genannten drucklosen Durchlauferhitzer 30 verwendet werden soll. Hier wird die Zuleitung für kaltes Wasser über den Durchgangskanal des Adapterbauteils 12 mit dem Mischwasserausgang des Adapterbodens 3 verbunden, der jetzt den Eingang für die Mischerkartusche bildet. Das Wasser strömt dann aus der Mischerkartusche durch zwei Auslässe aus, nämlich den Auslass für kaltes Wasser 31, der durch die Durchbrechung in den Einlass des Durchlauferhitzers 30 führt. Der zweite Auslass 32 aus dem Mischerventil führt zu einem T-Stück 33, an dessen Ausgang ein Schlauch 34 für beispielsweise eine Brause angeschlossen ist.

Die von Erfindung vorgeschlagene Sanitärarmatur mit dem Adapter im Sockel ist also geeignet, diese drei unterschiedlichen Anwendungsfälle abzudecken, ohne dass die Armatur in ihrem Aufbau geändert werden muss. Die Anpassung geschieht durch einfaches Umstecken des Sockelbauteils 4 gegenüber dem Armaturengehäuse 1.

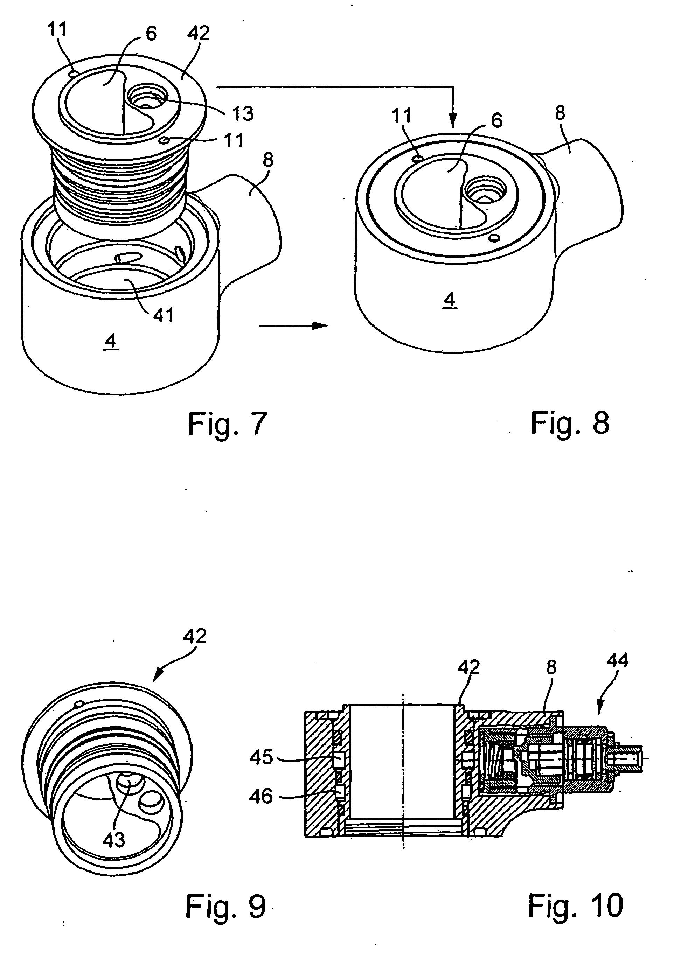

Die Figuren 7 bis 13 zeigen in größerer Einzelheit den möglichen Aufbau eines Sockelbauteils 4. Während bei der Darstellung der Figuren 4 bis 6 davon ausgegangen wurde, dass das Adapterbauteil 12 so mit dem Sockelbauteil 4 verbunden ist, dass eine Versetzung des Adapterbauteils 12 nur zusammen mit dem Sockelbauteil 4 möglich ist, ist bei der folgenden Ausführungsform das Adapterbauteil 42 ein getrenntes Bauteil, das in das Sockelbauteil 4 eingesetzt werden kann. Dies sieht man schematisch aus der Figur 7. Das Sockelbauteil 4 enthält einen mehrfach abgestuften Durchgang 41, in den das Adapterbauteil 42 eingesetzt werden kann. Der zusammengesetzte Zustand ist in Figur 8 dargestellt, die der Figur 2 entspricht.

Figur 9 zeigt eine perspektivische Ansicht des Adapterbauteils 42 der Figur 7 und 8 von unten. Aus dem Vergleich der Figuren 7 und 9 ergibt sich, dass an der Oberseite des Adapterbauteils 42, die dem Mischerventil zugeordnet ist, eine einzige Öffnung 13 ausmündet, während an der Unterseite zwei Öffnungen ausmünden. Eine dieser beiden Öffnungen 43 ist für die von der Mischarmatur weg führende Leitung 22 gedacht, während die andere Öffnung das untere Ende des Durchgangskanals bildet.

Figur 10 zeigt nun einen Schnitt durch die Anordnung der Figur 8. In dem Ansatz 8 ist das das Absperrventil 44 bildende Ventiloberteil eingesetzt. Sein Aufbau wird nicht näher beschrieben, da er an sich bekannt ist.

In der Außenseite des Adapterbauteils 42 sind zwei umlaufende Nuten 45, 46 gebildet. Die Verbindung zwischen den beiden Nuten 45, 46 kann über das Sockelbauteil 4 geschehen, was im Folgenden noch zu sehen ist. Die Verbindung wird durch das Absperrventil 44 geöffnet und geschlossen. Aus dem Durchgangskanal führt eine Abzweigung in die eine Nut 45, während der nicht durchgehende Kanal für die wegführende Leitung 22 mit der anderen Nut 46 in Verbindung steht.

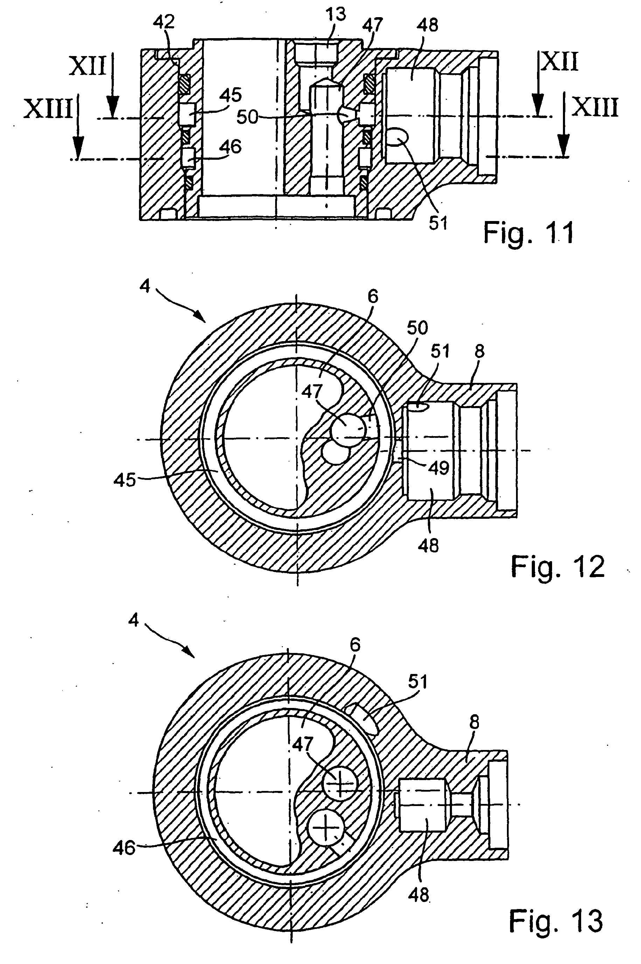

Figur 11 zeigt den Aufbau des Sockelbauteils und des Adapterbauteils 42 in größerer Einzelheit. Der Schnitt ist durch die Mittelachse gelegt. Der Durchgangskanal 47 wird von zwei sich treffenden Bohrungen gebildet. Aus dem Durchgangskanal 47 führt eine Abzweigung 50 in die obere der beiden umlaufenden Nuten 45. Aus der Nut 45 führt ein vor der Schnittebene der Figur 11 liegender Kanal in die Aufnahme 48 für das Ventiloberteil. Der Kanal 49 ist in Figur 12 zu sehen, ebenso wie die Abzweigung 50.

Aus der Aufnahme 48 führt eine weitere Abzweigung 51 in den Raum, wo die untere Nut 46 vorhanden ist. Diese Abzweigung ist in der Aufnahme 48 sowohl in Figur 11 als auch in Figur 12 zu sehen.

Das Absperrventil kann die Verbindung zwischen dem Kanal 49 und der Abzweigung 51 in der Aufnahme 48 verschließen und öffnen. Dadurch kann das durch den Durchgangskanal 47 strömende Wasser auch in die Öffnung 43 für die wegführende Leitung 22 gelangen.

Die Anordnung des Adapterbauteils 42 als gegenüber dem Sockelbauteil verdrehbares Teil hat den Vorteil, dass der das Absperrventil 44 aufnehmende Ansatz 8 immer an der gleichen Position des Armaturengehäuses angeordnet sein kann.

In den Figuren und der Beschreibung wurde nur ein Beispiel erwähnt, bei dem aus dem Adapterbauteil bzw. dem Sockelbauteil 4 eine einzige Leitung wegführt, die durch das Absperrventil 44 bedient wird. Es ist auch denkbar, dass mehr als eine Leitung wegführt, wozu dann auch mehr als ein Absperrventil vorhanden sein kann.

## Patentansprüche

1. Sanitärarmatur, mit
1.1 einem Armaturengehäuse (1),
1.2 einem Mischerventil (2) in dem Armaturengehäuse (1),
1.3 mindestens zwei mit dem Mischerventil (2) verbundenen Leitungen (7, 20, 21, 23, 24),
1.4 einem zusätzlichen Absperrventil (44) in der Armatur,
1.5 einer von dem Armaturengehäuse (1) wegführenden Leitung (22), die
1.5.1 selektiv mit jeweils einer von mindestens zwei Leitungen verbindbar und
1.5.2 durch das Absperrventil (44) absperrbar ist, sowie mit
1.6 einem in einem Sockelteil (4) des Armaturengehäuses (1) angeordneten Adapterteil (12, 42), das
1.7 eine Durchbrechung (6) für zu dem Mischerventil (2) führende oder von diesem weg führende Leitungen und
1.8 einen Durchgangskanal (47) für eine mit dem Mischerventil (2) verbundene Wasserführung und eine mit diesem Durchgangskanal (47) durch das Absperrventil (44) verbindbare Abzweigung aufweist.

2. Sanitärarmatur nach Anspruch 1, bei der die Änderung der Verbindung durch Umändern eines Teils der Armatur geschieht.

3. Sanitärarmatur nach Anspruch 1 oder 2, bei dem die Änderung der Verbindung durch Umstecken bzw. Tauschen von Anschlüssen der Leitungen zwischen einem Adapter und einem Armaturenboden erfolgt.

4. Sanitärarmatur nach einem der vorhergehenden Ansprüche, bei der das Adapterteil (12) fest in dem Sockelteil (4) angeordnet ist.

5. Sanitärarmatur nach einem der vorhergehenden Ansprüche, bei der das Adapterteil (42) in mehreren winkelmäßig versetzten Positionen mit dem Sockelteil (4) verbindbar ist.

6. Sanitärarmatur nach einem der vorhergehenden Ansprüche, bei der das Sockelteil ein getrenntes Bauteil (4) ist.

7. Sanitärarmatur nach Anspruch 6, bei der das Armaturengehäuse (1) von dem Sockelbauteil (4) lösbar ist.

8. Sanitärarmatur nach einem der vorhergehenden Ansprüche, bei der die Leitungen in dem Armaturengehäuse (1) flexible Schläuche sind.

9. Sanitärarmatur nach einem der vorhergehenden Ansprüche, bei der das Absperrventil (44) in dem Sockel (4) angeordnet ist.

10. Sanitärarmatur nach einem der vorhergehenden Ansprüche, bei der die wegführende Leitung (22) mit einer Zuleitung zu dem Mischerventil (2) verbindbar ist.

## Claims

1. Sanitary fitting having
1.1 a fitting housing (1),
1.2 a mixer valve (2) inside the fitting housing (1),
1.3 at least two lines (7, 20, 21, 23, 24) connected to the mixer valve (2),
1.4 an additional shut-off valve (44) inside the fitting,
1.5 a line (22) leading away from the fitting housing (1) and which
1.5.1 is selectively connectable to one of at least two lines and
1.5.2 is closable by the shut-off valve (44) and with
1.6 an adapter part (12, 42) arranged in a socket part (4) of the fitting housing (1) and having
1.7 an aperture (6) for the lines leading to the mixer valve (2) or leading away from it and
1.8 a through-channel (47) for a water flow system connected to the mixer valve (2) and a branch connectable to this through-channel (47) by the shut-off valve (44).

2. Sanitary fitting according to Claim 1, where the change in the connection is achieved by changing a part of the fitting.

3. Sanitary fitting according to Claim 1 or 2, where the change in the connection is achieved by repositioning or exchanging of connections for the lines between an adapter and a fitting bottom.

4. Sanitary fitting according to one of the preceding claims, where the adapter part (12) is permanently arranged inside the socket part (4).

5. Sanitary fitting according to one of the preceding claims, where the adapter part (42) is connectable to the socket (4) in several angular-offset positions.

6. Sanitary fitting according to one of the preceding claims, where the socket part is a separate component (4).

7. Sanitary fitting according to Claim 6, where the fitting housing (1) can be detached from the socket component (4).

8. Sanitary fitting according to one of the preceding claims, where the lines in the fitting housing (1) are flexible hoses.

9. Sanitary fitting according to one of the preceding claims, where the shut-off valve (44) is arranged inside the socket (4).

10. Sanitary fitting according to one of the preceding claims, where the discharging line (22) can be connected to a supply line to the mixer valve (2).

## Revendications

1. Robinet sanitaire, avec
1.1 un corps de robinet (1),
1.2 un mitigeur (2) dans le corps de robinet (1),
1.3 au moins deux conduites (7, 20, 21, 23, 24) reliées au mitigeur (2),
1.4 une vanne d'arrêt (44) additionnelle dans le robinet,
1.5 une conduite (22) sortant du corps de robinet (1), laquelle
1.5.1 peut être reliée de manière sélective avec respectivement l'une d'au moins deux conduites et
1.5.2 peut être fermée par la vanne d'arrêt (44), ainsi qu'avec
1.6 un adaptateur (12, 42) disposé dans un socle (4) du corps de robinet (1), qui présente
1.7 une ouverture (6) pour des conduites menant au mitigeur (2) ou sortant de celui-ci, et
1.8 un conduit traversant (47) pour une conduite d'eau reliée au mitigeur (2), et un raccord pouvant être relié à ce conduit traversant (47) par la vanne d'arrêt (44).

2. Robinet sanitaire selon la revendication 1, dans lequel la modification du branchement s'effectue par changement d'une pièce du robinet.

3. Robinet sanitaire selon la revendication 1 ou 2, dans lequel la modification du branchement s'effectue par permutation ou échange de raccords des conduites entre un adaptateur et un fond du robinet.

4. Robinet sanitaire selon l'une des revendications précédentes, dans lequel l'adaptateur (12) est disposé de manière fixe dans le socle (4).

5. Robinet sanitaire selon l'une des revendications précédentes, dans lequel l'adaptateur (42) peut être relié au socle (4) selon plusieurs positions décalées de manière angulaire.

6. Robinet sanitaire selon l'une des revendications précédentes, dans lequel le socle est une pièce distincte (4).

7. Robinet sanitaire selon la revendication 6, dans lequel le corps de robinet (1) peut être détaché du socle (4).

8. Robinet sanitaire selon l'une des revendications précédentes, dans lequel les conduites dans le corps de robinet (1) sont des tuyaux flexibles.

9. Robinet sanitaire selon l'une des revendications précédentes, dans lequel la vanne d'arrêt (44) est disposée dans le socle (4).

10. Robinet sanitaire selon l'une des revendications précédentes, dans lequel la conduite d'évacuation (22) peut être reliée à une conduite d'amenée vers le mitigeur (2).
